# EUROPEAN PATENT SPECIFICATION

(11) **EP 2 796 689 B1**
(45) Date of publication and mention of the grant of the patent: **14.09.2016**
(21) Application number: 13165432.9
(22) Date of filing: 25.04.2013
(51) Int. Cl.: F02D 41/00, F02D 19/10, F02D 41/22

(54) **Liquid fuel ignited gas engine with emergency operation**
Flüssigbrennstoff-gezündeter Gasmotor mit Notfallbetrieb
Moteur à gaz à allumage de carburant liquide avec fonctionnement d'urgence

(43) Date of publication of application: 29.10.2014
(73) Proprietor: Caterpillar Motoren GmbH & Co. KG, 24159 Kiel (DE)
(72) Inventor: Vogler, Finn, 23611 Bad Schwartau (DE)
(74) Representative: BRP Renaud & Partner mbB Rechtsanwälte Patentanwälte Steuerberater

(56) References cited:
- DE-A1- 10 335 152
- GB-A- 2 437 098
- JP-A- S57 206 745
- US-A1- 2007 125 321

## Description

### Technical Field

The present disclosure generally relates to internal combustion engines (ICEs), and more particularly, to operating liquid fuel ignited gas engines in emergency.

### Background

Liquid fuel ignited gas engines operate in a gaseous fuel mode (GFM). See for example GB 2 437 098 therein, in each cylinder unit, a pilot fuel injector injects a small amount of liquid fuel into a combustion chamber of the cylinder unit to thereby ignite a compressed gaseous fuel/air mix provided within the combustion chamber. In GFM, the gaseous fuel contributes the main portion of the energy content to the combustion process, while the energy content of the liquid pilot fuel is selected to optimize the combustion process. The maximum fuel energy content is an engine specific magnitude and defines the maximum power output that can be provided by the respective engine. For example, the maximum fuel energy content for a pilot fuel ignited gas engine is provided to 99 % by the gaseous fuel and to 1 % by the liquid pilot fuel. The provided energy content varies with the load under which the ICE is operated. Herein liquid fuel ignited gas engines are also referred to pilot fuel ignited gas engines in view of the liquid fuel being used as a pilot fuel or ignition fuel to initiate the combustion.

The pilot fuel injector is configured to provide the respective amount of liquid pilot fuel in a range that allows operation of the pilot fuel ignited gas engine in the required range from low load to maximum load. In general, maximum load operation requires providing several times the energy content of low load operation. For example, the six cylinder M 46 DF dual fuel engines by Caterpillar Motoren GmbH & Co. KG provide - as energy content of liquid fuel or gaseous fuel - for low load operation approx.220 MJ and for full load operation approx. 390 MJ, thereof respectively about 1.0 % is provided in gaseous fuel mode by the the injected liquid (pilot) fuel.

Obviously, for conventional Diesel engines operated with liquid fuel only, fuel injectors provide 100 % of the energy content to the combustion chamber. The amount of injected liquid fuel is accordingly much higher and the size of an injector for conventional Diesel engines is larger than the size of a pilot fuel injector.

Furthermore, dual fuel (DF) engines such as the M 46 DF engines by Caterpillar Motoren GmbH & Co. KG allow operation in a liquid fuel mode (LFM) using a specific LFM injector as well as operation in GFM using a specific GFM injector (also referred to as pilot fuel injector or ignition fuel injector). Providing mode-specific injectors allows achieving a comparable maximum power output for GFM and LFM. In general, LFM and GFM differ in the cleanliness of the combustion process, although LFM may also fulfil environmental requirements based on extensive and expensive engine design.

DF engines are used, for example, in marine applications. In some marine applications, dual fuel engines are operated in GFM within ECA-zones and in LFM outside the emission controlled area (ECA) zones to fulfil the environmental requirements.

Moreover, US 2009/0249799 A1 discloses for gas turbines, the transfer of heat from a vaporizer of liquefied natural gas (LNG) to charge air supplied to a gas turbine via a heat exchanger.

The present disclosure is directed, at least in part, to improving or overcoming one or more aspects of prior systems.

### Summary of the Disclosure

According to an aspect of the present disclosure, a liquid fuel ignited gas engine for operation in a gaseous fuel mode and a liquid fuel emergency mode comprises a cylinder unit of a sequence of cylinder units, the cylinder unit comprising a combustion chamber and a sole liquid fuel injector that is adapted to inject into the combustion chamber an ignition amount of liquid fuel for ignition in the gaseous fuel mode and an emergency amount of liquid fuel in the liquid fuel emergency mode, wherein, in the gaseous fuel mode, a maximum power output is achieved by a maximum fuel energy content comprised of a gas energy content of a maximum amount of gaseous fuel provided in the combustion chamber and an ignition energy content of a maximum ignition amount of liquid fuel injected into the combustion chamber, and the sole liquid fuel injector is adapted to inject maximally a maximum injection amount that has an emergency energy content in the range from 40 % to 10 % of the maximum fuel energy content, thereby allowing proper emergency operation in the liquid fuel emergency mode based only on liquid fuel injected by the sole liquid fuel injector.

According to another aspect of the present disclosure, a method for operating a liquid fuel ignited gas engine according to any one of claim 1 to claim 10 comprises operating the liquid fuel ignited gas engine in the gaseous fuel mode by injecting, with the sole liquid fuel injector, liquid fuel amounts in the range from 0.1 % to 2 % of the maximum fuel energy content, and operating the liquid fuel ignited gas engine in the liquid fuel emergency mode by injecting liquid fuel amounts in the range from 40 % to 10 % of the maximum fuel energy content.

According to another aspect of the present disclosure, a liquid fuel ignited gas engine for operation in a gaseous fuel mode and a liquid fuel emergency mode comprises a cylinder unit of a sequence of cylinder units, the cylinder unit comprising a combustion chamber and a sole liquid fuel injector that is adapted to inject into the combustion chamber an ignition amount of liquid fuel for ignition in the gaseous fuel mode and an emergency amount of liquid fuel in the liquid fuel emergency mode, wherein, in the gaseous fuel mode, a maximum power output is achieved by a maximum fuel energy content comprised of a gas energy content of a maximum amount of gaseous fuel provided in the combustion chamber and an ignition energy content of a maximum ignition amount of liquid fuel injected into the combustion chamber, and the sole liquid fuel injector is adapted to inject maximally a maximum injection amount that has an emergency energy content in the range from 40 % to 10 % of the maximum fuel energy content, thereby allowing proper emergency operation in the liquid fuel emergency mode based only on liquid fuel injected by the sole liquid fuel injector.

Other features and aspects of this disclosure will be apparent from the following description and the accompanying drawings.

### Brief Description of the Drawings

Fig. 1 shows an exemplary schematic drawing of a pilot fuel ignited gas engine with a sole liquid fuel injector; and
Fig. 2 shows an illustration of a cooling system for an LNG based pilot fuel ignited gas engines.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that, in emergency situations, there is an exception in the regulation for operating an ICE in an ECA-zone. Specifically, ECA-zone requirements do not need to be fulfilled in emergency situations. Based thereon, a new ICE concept is proposed that relates a gas engine to a "simple type" of a dual fuel engine. In particular, an ICE is proposed that uses, for each cylinder, a liquid fuel system with a specifically configured sole liquid fuel injector for the pilot injection as well as for emergency operation. Thus, besides GFM, the sole liquid fuel injector is configured to also allow operating the ICE in a liquid fuel emergency mode (LFEM). The LFEM provides a power output that is reduced when compared to the maximum GFM power output and that is still sufficient, for example, to maneuver a ship safely into a harbor.

The proposed concept affects the design of the ICE with respect to the performance requirements of the pilot injection system.

The performance of the pilot injection system is configured such that the sole liquid fuel injector provides a maximum injected liquid fuel amount that allows at maximum 40% load in LFEM (in comparison to the maximum load of GFM). Although in LFEM, the emissions as well as the efficiency is not of primary interest and does not need to be considered when designing the engine, in some embodiments, LFEM may even fulfill emission requirements such as IMO III requirements.

Accordingly, the injection performance requirement is selected such that the sole liquid fuel injector provides - as a minimal injection amount - an amount, which enables optimally igniting the gas during GFM in low load operation, and - as a maximal injection amount - an amount, which enables proper LFEM operation.

The injection system may fulfill requirements of the International Maritime Organization (such as IMO III) across the complete range of load. For example, when less than about 3 % of the total fuel energy content is provided by the injected liquid ignition fuel (for example 1 %), NOx formation and hydrocarbon formation may not take place such that IMO III is fulfilled. In GFM, a lower limit may be about 0.1 % of the fuel energy content; less fuel may not be able to ignite the gas/air mix.

In some embodiments, the injection performance may be selected such that the maximal amount of injected fuel provides the power that is required for LFEM. For example, 40 % or less such as 30 % of the maximum GFM load may be needed to operate the ICE in LFEM. Accordingly, in LFEM, for example, only (maximally) 40 % of the maximum fuel energy content (as provided in GFM under full load) is injected. In that case, 40 % of the maximum fuel energy content corresponds to the maximum power output provided in LFEM.

Accordingly, the fuel injector is selected for an engine to be able to provide fuel amounts within the range from 0.1 % to 40 % of the maximum fuel energy content - in contrast to state of the art DF injection systems that provide fuel amounts within the range from 10 % to 100 % of the maximum fuel energy content with the LFM injector such that the maximum output power in GFM and LFM is comparable.

As understood by the skilled person, the liquid fuel amounts to be injected depend on the type of ICE. For example, it depends on a fast/slow combustion, the therefrom resulting efficiency, emission values, cylinder size etc. In view of its dependence on the specific ICE features and also the respective objective of the ICE, the range of the amount to be injected is specified generally as a minimum amount and a maximum amount. That range may span over a factor of 400 (or less) of 0.1 % of the maximum fuel energy content provided at full load in GFM.

In contrast, in state of the art DF engines, the injector may be configured to allow an injection such that about 10 % up to 100 % of the maximum fuel energy content can be provided by the injected liquid ignition fuel in LFM. Injecting 10 % of the maximum fuel energy content may not be sufficient to reach IMO III requirements in GFM. Even if a minimum injection of about 5-6 % of the maximum fuel energy content in GFM may be possible with prior art configurations, this minimum amount may still be too large to achieve IMO III requirements in GFM.

The proposed concept may further affect the design of the cooling system of the ICE in particular with respect to the capacity of the engine cooling system in marine applications.

For the proposed pilot fuel ignited gas engine, due to the operation on LNG, one may apply a water-glycol-circuit for LNG evaporation and heating such that sufficient amounts of gaseous fuel are provided to the ICE. It is proposed to use that water-glycol-circuit to pre-cool the coolant (usually sea water) that is used to receive the heat from an engine cooling system. The LNG evaporation based pre-cooling uses the latent heat of the phase transition of the LNG, which is not available during LFEM.

The engine cooling system usually comprises, for example, a high temperature cooling cycle and a low temperature cooling cycle. The LNG evaporation pre-cooling achieves a lower coolant temperature upstream of heat exchanger(s) of the engine cooling system such that the heat exchanger(s) can be reduced in size.

In contrast, for conventional DF engines in marine applications, the engine cooling system usually is usually similarly configured such that the heat received in the high temperature cooling cycle and the low temperature cooling cycle is transferred to sea water in LFM. However, for a conventional DF engine the engine cooling system needs to be sized to provide sufficient cooling also for 100 % power output in the LFM. Thus, cross-cooling has no effect on the requirements of the cooling system size for DF engines and, thus, may not be needed in DF engines.

As mentioned above, for the proposed pilot fuel ignited gas engine, no LNG based pre-cooling is available in LFEM operation. However, as the engine operates only with reduced power output in comparison to maximum power output of a DF engine in LFM, the engine cooling system can be reduced in performance and configured to maximally handle the reduced amount of heat in LFEM, as one may provide LNG evaporation based pre-cooling for GFM. Accordingly, the size of the heat exchanger(s) between the sea water and the low temperature and high temperature cooling circuits can be reduced as long as proper operation in GFM and proper operation with 40 % output in LFEM is ensured. Accordingly, providing LNG evaporation based pre-cooling and reducting the engine cooling system performance allows reducing over all cost of the cooling system.

In some embodiments, the pilot injection system may be a common rail system. Accordingly, the proposed pilot fuel ignited gas engine concept may not need an FCT-system.

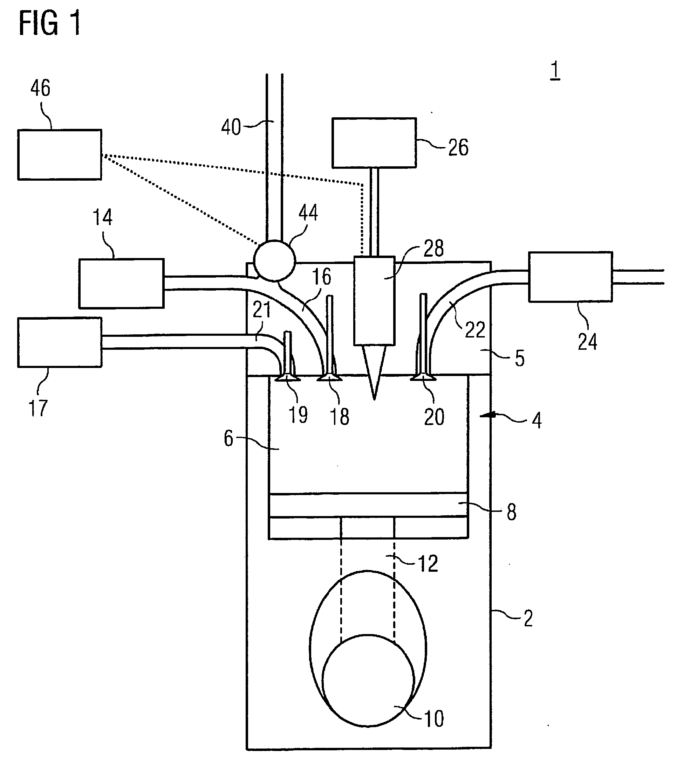

In the following, an exemplary cylinder unit is described in connection with Fig. 1 and an LNG-based cooling system is described in connection with Fig, 2.

Referring to Fig. 1, an exemplary pilot fuel ignited gas engine 1 includes an engine unit, an air system, an exhaust system, a liquid fuel system, and a gaseous fuel system.

The engine unit comprises an engine block 2 providing various cylinder units 4. Each cylinder unit 4 comprises a combustion chamber 6 for combusting fuel delimited by a piston 8, a cylinder line (not shown), and a cylinder head 5.

Fig. 1 further indicates a crank shaft 10 drivingly coupled to piston 8 via a piston rod 12. Cylinder unit 4 is covered by cylinder head 5 and several cylinder units 4 may be arranged, for example, in an inline V, W, or any other known configuration.

The air system comprises a charge air system 14, an intake port 16, and an inlet valve 18 within cylinder head 5. Charge air system 14 is fluidly connected to combustion chamber 6 via intake port 16. In some embodiments, each cylinder unit 4 may comprise two or more intake ports 16, each having an inlet valve 18.

The air system may further comprise an instrument air system 17 and a starter valve 19. Instrument air system 17 comprises an air compressor for providing pressurized air. Starter valve 19 is adapted to allow or restrict flow of instrument air into the combustion chamber 6, for example, in an initial phase of operation of pilot fuel ignited gas engine 1. In some embodiments, instrument air system 17 may comprise an air filter.

Inlet valve 18 is arranged within intake port 16, and is adapted to allow or restrict flow of a mixture of compressed charge air and gaseous fuel (in GFM) into combustion chamber 6. During LFEM, intake port 16 controls the flow of the charge air only, i.e. without gaseous fuel mixed thereto.

Some embodiments may comprise an air intake manifold (not shown) fluidly interconnecting the charge air system 14 with intake ports 16 of the series of cylinder units 4.

The exhaust system comprises an outlet valve 20, an exhaust port 22, and an exhaust gas system 24. In some embodiments, each cylinder unit 4 may comprise two or more exhaust ports 22, each having an outlet valve 20. Exhaust gas system 24 is fluidly connected to the at least one combustion chamber 6 via exhaust port 22. Outlet valve 20 may be arranged within cylinder head 5 and is adapted to allow or restrict flow of exhaust gas from combustion chamber 6 into exhaust port 22.

Some embodiments may comprise at least one exhaust manifold (not shown) fluidly interconnecting exhaust ports 22 of the various cylinder units 4 and exhaust gas system 24.

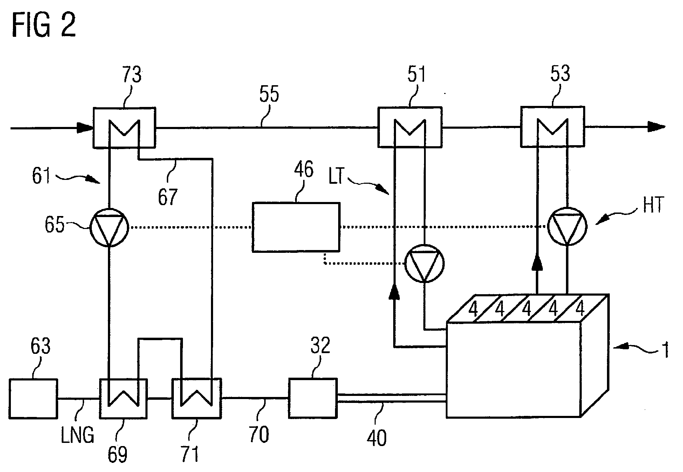

Cooling of cylinder units 4 and the charge air within charge air system 14 is preformed by an engine cooling system comprising, for example, a low temperature cooling circuit LT and high temperature cooling circuit HT (see Fig. 2). The cooling circuits are, for example, fluidly connected to cooling channels, which surround combustion chamber 6. Low temperature cooling circuit LT comprises one or more LT heat exchanger(s) 51 and high temperature cooling circuit HT comprises one or more HT heat exchanger(s) 53. LT heat exchanger(s) 51 and HT heat exchanger(s) 53 are configured to release heat into passing coolant 55, for example, sea water for marine applications or water or air for land based applications.

GFM operation uses the liquid fuel system and the gaseous fuel system, while LFEM only uses the liquid fuel system.

The liquid fuel system includes a liquid fuel tank unit 26 and a sole liquid fuel injector 28, i.e. only a single liquid fuel injector is provided per cylinder unit 4. Liquid fuel injector 28 is fluidly connected to liquid fuel tank unit 26. In some embodiments, liquid fuel tank unit 26 may comprise various liquid fuel tanks for storing different types of liquid fuel.

The gaseous fuel system comprises inter alia a gaseous fuel pipe 40 and at least one gaseous fuel admission valve 44. Gaseous fuel pipe 40 receives the gaseous fuel (in gas phase) and distributes the same to the various cylinder units 4. Gaseous fuel admission valve 44 controls the amount of gaseous fuel mixed with the charge air.

Referring to Fig. 2, the gaseous fuel system further comprises a gas valve unit 32 having, for example, a control valve, a shut-off valve, and a venting valve. The control valve is adapted to adjust flow of gaseous fuel. The shut-off valve is adapted to instantaneously open or restrict flow of gaseous fuel. The venting valve is fluidly connected to gaseous fuel pipe 40, and is adapted to release left gaseous fuel within gaseous fuel pipe 40 if GFM is stopped.

In some embodiments, a downstream section of gaseous fuel pipe 40 may be configured as a gaseous fuel manifold (not shown) that may connect an upstream section of gaseous fuel pipe 40 to intake port 16 via gaseous fuel admission valve 44.

At least one gaseous fuel admission valve 44 is arranged at the engine section of gaseous fuel pipe 40. For example, each cylinder unit 4 may comprise one gaseous fuel admission valve 44 that may be attached to cylinder head 5 and provide a fluid connection between gaseous fuel pipe 40 and intake port 16 if opened.

Gaseous fuel admission valve 44 is adapted to allow or restrict flow of gaseous fuel into intake port 16 to mix with charge air from charge air system 14. Specifically, gaseous fuel admission valve 44 is adapted to dose gaseous fuel into charge air passing intake port 16 in GFM.

It is noted that gaseous fuel admission valve 44, for example configured as a solenoid actuated valve, can only allow or restrict flow of gaseous fuel if gaseous fuel is supplied from gaseous fuel system 30 and the shut-off and control valve of gas valve unit 32 allow flow of gaseous fuel from gaseous fuel system 30 into gaseous fuel pipe 40.

Referring to Fig. 2, the gaseous fuel system further comprises a cross-cooling system with a heat transfer medium circuit 61 for evaporating LNG received from an LNG tank 63 and pre-cooling coolant 55. The cross-cooling system further comprises a control unit that may be part of a control unit 46 of pilot fuel ignited gas engine 1.

Heat transfer medium circuit 61 comprises a pump 65 for pumping a heat transfer medium 67 such as a water-glycol mix, an evaporator 69 for evaporating LNG to gaseous fuel 70, a gas heater 71 for further heating gaseous fuel 70, and a pre-cooling heat exchanger 73 for warming circulating heat transfer medium 67 and respectively cooling coolant 55.

As shown in Fig. 2, pre-cooling heat exchanger 73 is exemplarily positioned upstream of LT heat exchanger 51 and HT heat exchanger 53 in the flow direction of coolant 55. However, pre-cooling heat exchanger 73 could alternatively be positioned in-between heat exchangers of the engine cooling system.

Specifically, for LNG operation of, for example, a ferry or locally operated ships, the gaseous fuel system (LNG system) with evaporator 69 and gas heater 71 upstream of gas valve unit 32 supplies the requested amount of gaseous fuel to cylinder units 4 when operated in GFM. Evaporator 69 and gas heater 71 use the "heat" of coolant 55 (sea water) to evaporate the LNG. Thereby, coolant 55 is cooled down. Cooled down coolant 55 is used to pick up the heat of the engine cooling system, for example the heat acquired within the low temperature cooling circuit LT and high temperature cooling circuit HT.

Moreover, for pilot fuel ignited gas engine, the cross-cooling has the advantage that the engine cooling system, specifically the LT heat exchanger 51 and HT heat exchanger 53, needs only to provide cooling for 40 % of the maximum power output in LFEM because cooling for 100 % power output in GFM can use the cross-cooling. Thus, the cooling capacity requirements, for example, for the LT heat exchanger 51 and HT heat exchanger 53 are reduced.

Pilot fuel ignited gas engine 1 further comprises control unit 46 for controlling the operation of the combustion process in GFM and LFEM.

Control unit 46 is connected to, for example, gaseous fuel admission valve 44 and the fuel injection system via control connection lines (indicated by dotted lines in Fig. 1). Control unit 46 is further connected to the pump 65 of the cooling circuits and the pumps of the heat transfer medium circuit 61 (indicated by dotted lines in Fig. 1).

For example, in GFM, control unit 46 is configured to open gaseous fuel admission valve 44 to mix gaseous fuel with the charge air. In addition, gaseous fuel admission valve 44 controls the amount and timing of the pilot fuel injection. Control unit 46 may use pressure and temperature values measured with various sensors. In LFEM, control unit 46 is configured to operate pilot fuel ignited gas engine 1 only based on liquid fuel injected with sole liquid fuel injector 28.

Control unit 46 may be a single microprocessor or plural microprocessors that may include means for controlling, among others, an operation of the various components of pilot fuel ignited gas engine 1, for example, inlet valve 18, starter valve 19, outlet valve 20, gas valve unit 32, and gaseous fuel admission valve 44. Control unit 46 may be a general engine control unit (ECU) capable of controlling numeral functions associated with pilot fuel ignited gas engine 1 and/or its associated components. Control unit 46 may include all the components required to run an application such as, for example, a memory, a secondary storage device, and a processor such as a central processing unit or any other means known in the art for controlling pilot fuel ignited gas engine 1 and its various components.

Various other known circuits may be associated with control unit 46, including power supply circuitry, signal-conditioning circuitry, communication circuitry, and other appropriate circuitry. Control unit 46 may analyze and compare received and stored data, and, based on instructions and data stored in memory or input by a user, determine whether action is required. For example, control unit 46 may compare received values with target values stored in memory, and based on the results of the comparison, control unit 46 may transmit signals to one or more components to alter the operation status thereof.

Control unit 46 may include any memory device known in the art for storing data relating to operation of pilot fuel ignited gas engine 1 and its components. The data may be stored in the form of one or more maps that describe and/or relate, for example, valve opening timing. Each of the maps may be in the form of tables, graphs, and/or equations, and include a compilation of data collected from lab and/or field operation of the pilot fuel ignited gas engine 1. The maps may be generated by performing instrumented tests on the operation of the pilot fuel ignited gas engine 1 under various operating conditions while varying parameters associated therewith. Control unit 46 may reference these maps and control operation of one component in response to the desired operation of another component.

### Industrial Applicability

As will be understood by the skilled person, the engine configuration disclosed herein relates to engines with a single fuel injector per cylinder unit which is used in GFM for the ignition/pilot injection and in the LFEM for the injection of the liquid fuel. Accordingly, a sole injector is provided for each cylinder unit which are operable in the two modes, GFM and LFEM.

Herein, the term "pilot/liquid fuel ignited gas engine" may refer to internal combustion engines which may be used as main or auxiliary engines in ships/vessels such as cruiser liners, cargo ships, container ships, tankers, and other vehicles as well as in stationary power providing systems such as power plants for production of heat and/or electricity. Fuels for pilot fuel ignited gas engine may include - as liquid fuels - Diesel oil, marine Diesel oil, or even heavy fuel oil and - as gaseous fuel, natural gas.

Although the preferred embodiments of this invention have been described herein, improvements and modifications may be incorporated without departing from the scope of the following claims.

## Claims

1. A liquid fuel ignited gas engine (1) for operation in a gaseous fuel mode and a liquid fuel emergency mode, the liquid fuel ignited gas engine (1) comprising:
a cylinder unit (4) of a sequence of cylinder units, the cylinder unit (4) comprising a combustion chamber (6) and a sole liquid fuel injector (28) that is adapted to inject into the combustion chamber (6) an ignition amount of liquid fuel for ignition in the gaseous fuel mode and an emergency amount of liquid fuel in the liquid fuel emergency mode,
wherein, in the gaseous fuel mode, a maximum power output is achieved by a maximum fuel energy content comprised of a gaseous fuel energy content of a maximum amount of gaseous fuel provided in the combustion chamber and an ignition energy content of a maximum ignition amount of liquid fuel injected into the combustion chamber (6), and
the sole liquid fuel injector (28) is adapted to inject maximally a maximum injection amount that has an emergency energy content in the range from 40 % to 10 % of the maximum fuel energy content, thereby allowing proper emergency operation in the liquid fuel emergency mode based only on liquid fuel injected by the sole liquid fuel injector.

2. The liquid fuel ignited gas engine (1) of claim 1, wherein the sole liquid fuel injector (28) is adapted to inject, in the gaseous fuel mode, liquid fuel amounts in the range from 0.1 % to 2 %, for example 0.1 %, 0.5 %, 1 %, or 2 %, of the maximum fuel energy content to provide sufficient ignition of the gaseous fuel supplied provided in the combustion chamber (6) in gaseous fuel mode.

3. The liquid fuel ignited gas engine (1) of claim 1 or claim 2, wherein the sole liquid fuel injector (28) is adapted to inject, in the liquid fuel emergency mode, liquid fuel amounts in the range from 40 % to 10 %, for example 40 %, 35 %, 30 %, 25 %, 20 %, 15 %,or 10 %, of the maximum fuel energy content to provide sufficient emergency power in the liquid fuel mode.

4. The liquid fuel ignited gas engine (1) of any one of claim 1 to claim 3, wherein the sole liquid fuel injector (28) is adapted such that, in the gaseous fuel mode, the ignition amount of liquid fuel is provided with an energy content in the range from 0.1 % to 2% of the maximum fuel energy content.

5. The liquid fuel ignited gas engine (1) of any one of claim 1 to claim 4, wherein the sole liquid fuel injector (28) is adapted such that the emergency liquid fuel amount is in the range from 400 times the ignition amount of liquid fuel to 3 times the minimum ignition amount of liquid fuel such as 350, 300, 250, or 200 times the ignition amount of liquid fuel.

6. The liquid fuel ignited gas engine (1) of any one of claim 1 to claim 5, further comprising a control unit (46) to set the amount of fuel injected by the sole liquid fuel injector (28) in dependence of the type of operation mode, the load, and/or the type of liquid fuel.

7. The liquid fuel ignited gas engine (1) of any one of claim 1 to claim 6, further comprising an engine related cooling system (LT, HT) operated on a primary coolant and having at least one heat exchanger (51, 53) for cooling the coolant based on a secondary coolant (55) such as sea water, wherein the engine related cooling system (LT, HT) is configured to have, as a maximum cooling power, the cooling power required for operating the liquid fuel ignited gas engine (1) in the liquid fuel emergency mode.

8. The liquid fuel ignited gas engine (1) of any one of claim 1 to claim 7, further comprising a cross-cooling system (61) with a pre-cooling heat exchanger (73) for pre-cooling the secondary coolant (55) using the latent heat required for the transition of liquefied gaseous fuel into the gas phase.

9. The liquid fuel ignited gas engine (1) of any one of claim 1 to claim 8, wherein, in the flow path of the secondary coolant (55), the at least one heat exchanger (51, 53) of the engine related cooling system is provided downstream of the pre-cooling heat exchanger (73) of the cross-cooling system (61).

10. The liquid fuel ignited gas engine (1) of claim 9, wherein the cross-cooling system (61) is configured for pre-cooling the secondary coolant (55) before interacting with the at least one heat exchanger (51, 53).

11. A method for operating a liquid fuel ignited gas engine (1) according to any one of claim 1 to claim 10, the method comprising:
operating the liquid fuel ignited gas engine (1) in the gaseous fuel mode by injecting, with the sole liquid fuel injector (28), liquid fuel amounts in the range from 0.1 % to 2 % of the maximum fuel energy content, and
operating the liquid fuel ignited gas engine (1) in the liquid fuel emergency mode by injecting liquid fuel amounts in the range from 40 % to 10 % of the maximum fuel energy content.

12. The method of claim 11, further comprising
cooling the liquid fuel ignited gas engine (1) with an engine related primary coolant that itself is cooled via a secondary coolant (55) such as sea water,
wherein, in the gaseous fuel mode, the secondary coolant (55) is pre-cooled using the latent heat required for transitioning liquefied gaseous fuel into the gas phase.

13. A ship comprising:
at least one liquid fuel ignited gas engine (1) according to any one of claim 1 to claim 10;
a liquefied natural gas tank (63).

14. The ship of claim 13 further comprising:
an engine cooling system (LT, HT) transferring heat from the liquid fuel ignited gas engine (1) via a primary coolant to a secondary coolant (55);
a cross-cooling system (61) with a pre-cooling heat exchanger (73) for pre-cooling the secondary coolant (55) using the latent heat required for the transition of the liquefied gaseous fuel into the gas phase.

15. The ship of claim 14, wherein the cross-cooling system (61) further comprises a evaporator (69) for evaporating LNG to gaseous fuel and a gas heater (71) for further heating the evaporated gaseous fuel.

## Patentansprüche

1. Flüssigkraftstoffgezündeter Gasmotor (1) zum Betrieb in einem Gaskraftstoffmodus und einem Flüssigkraftstoffnotfallmodus, wobei der flüssigkraftstoffgezündete Motor (1) Folgendes umfasst:
eine Zylindereinheit (4) aus einer Abfolge von Zylindereinheiten, wobei die Zylindereinheit (4) eine Verbrennungskammer (6) und eine einzelne Flüssigkraftstoffeinspritzdüse (28), die dazu ausgelegt ist, in dem Gaskraftstoffmodus eine Zündmenge an flüssigem Kraftstoff und in dem Flüssigkraftstoffnotfallmodus eine Notfallmenge an flüssigem Kraftstoff in die Verbrennungskammer (6) einzuspritzen, umfasst,
wobei in dem Gaskraftstoffmodus durch einen maximalen Kraftstoffenergieinhalt, der aus einem Gaskraftstoffenergieinhalt einer Höchstmenge an gasförmigem Kraftstoff, der in der Verbrennungskammer bereitgestellt ist, und einem Zündenergieinhalt einer maximalen Zündmenge an flüssigem Kraftstoff, der in die Verbrennungskammer (6) eingespritzt wird, besteht, eine maximale Leistungsausgabe erhalten wird, und
die einzelne Flüssigkraftstoffeinspritzdüse (28) dazu ausgelegt ist, höchstens eine maximale Einspritzmenge, die einen Notfallenergieinhalt in dem Bereich von 40 % bis 10 % des maximalen Kraftstoffenergiegehalts aufweist, einzuspritzen, wodurch in dem Flüssigkraftstoffnotfallbetrieb, der nur auf flüssigem Kraftstoff, welcher durch die einzelne Flüssigkraftstoffeinspritzdüse eingespritzt wird, beruht, ein angemessener Notfallbetrieb gestattet wird.

2. Flüssigkraftstoffgezündeter Gasmotor (1) nach Anspruch 1, wobei die einzelne Flüssigkraftstoffeinspritzdüse (28) dazu ausgelegt ist, in dem Gaskraftstoffmodus Flüssigkraftstoffmengen in dem Bereich von 0,1 % bis 2 %, zum Beispiel 0,1 %, 0,5 %, 1 %, oder 2 %, des maximalen Kraftstoffenergieinhalts einzuspritzen, um in dem Gaskraftstoffmodus eine ausreichende Zündung des gelieferten gasförmigen Kraftstoffs, der in der Verbrennungskammer (6) bereitgestellt ist, bereitzustellen.

3. Flüssigkraftstoffgezündeter Gasmotor (1) nach Anspruch 1 oder Anspruch 2, wobei die einzelne Flüssigkraftstoffeinspritzdüse (28) dazu ausgelegt ist, in dem Flüssigkraftstoffnotfallmodus Flüssigkraftstoffmengen in dem Bereich von 40 % bis 10 %, zum Beispiel 40 %, 35 %, 30 %, 25 %, 20 %, 15 %, oder 10 %, des maximalen Kraftstoffenergieinhalts einzuspritzen, um in dem Flüssigkraftstoffmodus eine ausreichende Notfallleistung bereitzustellen.

4. Flüssigkraftstoffgezündeter Gasmotor (1) nach einem von Anspruch 1 bis Anspruch 3, wobei die einzelne Flüssigkraftstoffeinspritzdüse (28) dazu ausgelegt ist, dass in dem Gaskraftstoffmodus die Zündmenge des flüssigen Kraftstoffs mit einem Energieinhalt in dem Bereich von 0,1 % bis 2 % des maximalen Kraftstoffenergieinhalts bereitgestellt wird.

5. Flüssigkraftstoffgezündeter Gasmotor (1) nach einem von Anspruch 1 bis Anspruch 4, wobei die einzelne Flüssigkraftstoffeinspritzdüse (28) dazu ausgelegt ist, dass die Notfallflüssigkraftstoffmenge in dem Bereich von dem 400fachen der Zündmenge des flüssigen Kraftstoffs bis zu dem 3fachen der Mindestzündmenge des flüssigen Kraftstoffs, wie etwa dem 350-, 300-, 250-, oder 200fachen der Zündmenge des flüssigen Kraftstoffs liegt.

6. Flüssigkraftstoffgezündeter Gasmotor (1) nach einem von Anspruch 1 bis Anspruch 5, ferner umfassend eine Steuereinheit (46), um die Menge des Kraftstoffs, der durch die einzelne Flüssigkraftstoffeinspritzdüse (28) eingespritzt wird, abhängig von der Art des Betriebsmodus, der Belastung und/oder der Art des flüssigen Kraftstoffs festzulegen.

7. Flüssigkraftstoffgezündeter Gasmotor (1) nach einem von Anspruch 1 bis Anspruch 6, ferner umfassend ein motorbezogenes Kühlsystem (LT, HT), das mit einem primären Kühlmittel betrieben wird und zumindest einen Wärmeaustauscher (51, 53) zum Kühlen des Kühlmittels auf Basis eines sekundären Kühlmittels (55) wie etwa Meerwasser aufweist, wobei das motorbezogene Kühlsystem (LT, HT) so ausgebildet ist, dass es als Höchstkühlleistung jene Kühlleistung aufweist, die nötig ist, um den flüssigkraftstoffgezündeten Gasmotor (1) in dem Flüssigkraftstoffnotfallmodus zu betreiben.

8. Flüssigkraftstoffgezündeter Gasmotor (1) nach einem von Anspruch 1 bis Anspruch 7, ferner umfassend ein Querkühlsystem (61) mit einem vorkühlenden Wärmeaustauscher (73) zum Vorkühlen des sekundären Kühlmittels (55) unter Verwendung der latenten Wärme, die für den Übergang von verflüssigtem gasförmigen Kraftstoff in die Gasphase nötig ist.

9. Flüssigkraftstoffgezündeter Gasmotor (1) nach einem von Anspruch 1 bis Anspruch 8, wobei in dem Fließweg des sekundären Kühlmittels (55) der zumindest eine Wärmeaustauscher (51, 53) des motorbezogenen Kühlsystems stromabwärts von dem vorkühlenden Wärmeaustauscher (73) des Querkühlsystems (61) bereitgestellt ist.

10. Flüssigkraftstoffgezündeter Gasmotor (1) nach Anspruch 9, wobei das Querkühlsystem (61) ausgebildet ist, um das sekundäre Kühlmittel (55) vor der Wechselwirkung mit dem zumindest einen Wärmeaustauscher (51, 53) vorzukühlen.

11. Verfahren zum Betreiben eines flüssigkraftstoffgezündeten Gasmotors (1) nach einem von Anspruch 1 bis Anspruch 10, wobei das Verfahren Folgendes umfasst:
Betreiben des flüssigkraftstoffgezündeten Gasmotors (1) durch Einspritzen von Flüssigkraftstoffmengen in dem Bereich von 0,1 % bis 2 % des maximalen Kraftstoffenergieinhalts mit der einzigen Flüssigkraftstoffeinspritzdüse (28) in dem Gaskraftstoffmodus, und
Betreiben des flüssigkraftstoffgezündeten Gasmotors (1) durch Einspritzen von Flüssigkraftstoffmengen in dem Bereich von 40 % bis 10 % des maximalen Kraftstoffenergieinhalts in dem Flüssigkraftstoffnotfallmodus.

12. Verfahren nach Anspruch 11, ferner umfassend:
Kühlen des flüssigkraftstoffgezündeten Gasmotors (1) mit einem motorbezogenen primären Kühlmittel, das selbst über ein sekundäres Kühlmittel (55) wie etwa Meerwasser gekühlt wird,
wobei das sekundäre Kühlmittel (55) in dem Gaskraftstoffmodus unter Verwendung der latenten Wärme, die zum Überführen von verflüssigtem gasförmigen Kraftstoff in die Gasphase nötig ist, vorgekühlt wird.

13. Schiff, umfassend:
zumindest einen flüssigkraftstoffgezündeten Gasmotor (1) nach einem von Anspruch 1 bis Anspruch 10;
einen Flüssigerdgastank (63).

14. Schiff nach Anspruch 13, ferner umfassend:
ein Motorkühlsystem (LT, HT), das Wärme von dem flüssigkraftstoffgezündeten Gasmotor (1) über ein primäres Kühlmittel zu einem sekundären Kühlmittel (55) überträgt;
ein Querkühlsystem (61) mit einem vorkühlenden Wärmeaustauscher (73) zum Vorkühlen des sekundären Kühlmittels (55) unter Verwendung der latenten Wärme, die für den Übergang von verflüssigtem gasförmigen Kraftstoff in die Gasphase nötig ist.

15. Schiff nach Anspruch 14, wobei das Querkühlsystem (61) ferner einen Verdampfer (69) zum Verdampfen von Flüssigerdgas in gasförmigen Kraftstoff und einen Gaserhitzer (71) zum weiteren Erhitzen des verdampften gasförmigen Kraftstoffs umfasst.

## Revendications

1. Moteur à gaz à allumage de carburant liquide (1) pour un fonctionnement en mode de carburant gazeux et en mode d'urgence de carburant liquide, le moteur à gaz à allumage de carburant liquide (1) comprenant :
une unité cylindrique (4) d'une séquence d'unités cylindriques, l'unité cylindrique (4) comprenant une chambre de combustion (6) et un seul injecteur de carburant liquide (28) qui est adapté pour injecter dans la chambre de combustion (6) une quantité d'allumage de carburant liquide pour allumage en mode de carburant gazeux et une quantité d'urgence de carburant liquide en mode d'urgence de carburant liquide,
dans lequel, en mode de carburant gazeux, une sortie d'énergie maximale est atteinte par une teneur en énergie de carburant maximale constituée d'une teneur en énergie de carburant gazeux d'une quantité maximale de carburant gazeux fournie dans la chambre de combustion et d'une teneur en énergie d'allumage d'une quantité d'allumage maximale de carburant liquide injecté dans la chambre de combustion (6), et
le seul injecteur de carburant liquide (28) est adapté pour injecter au maximum une quantité d'injection maximale qui a une teneur en énergie d'urgence dans la plage de 40 à 10 % de la teneur en énergie de carburant maximale, permettant de la sorte un fonctionnement d'urgence approprié en mode d'urgence de carburant liquide sur la base uniquement du carburant liquide injecté par le seul injecteur de carburant liquide.

2. Moteur à gaz à allumage de carburant liquide (1) selon la revendication 1, dans lequel le seuil injecteur de carburant liquide (28) est adapté pour injecter, en mode de carburant gazeux, des quantités de carburant liquide dans la plage de 0,1 % à 2 %, par exemple 0,1 %, 0,5 %, 1 % ou 2 % de la teneur en énergie de carburant maximale pour fournir un allumage suffisant du carburant gazeux fourni prévu dans la chambre de combustion (6) en mode de carburant gazeux.

3. Moteur à gaz à allumage de carburant liquide (1) selon la revendication 1 ou la revendication 2, dans lequel le seul injecteur de carburant liquide (28) est adapté pour injecter, en mode d'urgence de carburant liquide, des quantités de carburant liquide dans la plage de 40 % à 10 %, par exemple 40 %, 35 %, 30 %, 25 %, 20 %, 15 % ou 10 %, de la teneur en énergie de carburant maximale pour fournir une puissance d'urgence suffisante en mode de carburant liquide.

4. Moteur à gaz à allumage de carburant liquide (1) selon l'une quelconque des revendications 1 à 3, dans lequel le seul injecteur de carburant liquide (28) est adapté de sorte que, en mode de carburant gazeux, la quantité d'allumage de carburant liquide soit fournie avec une teneur en énergie dans la plage de 0,1 % à 2 % de la teneur en énergie de carburant maximale.

5. Moteur à gaz à allumage de carburant liquide (1) selon l'une quelconque des revendications 1 à 4, dans lequel le seul injecteur de carburant liquide (28) est adapté pour que la quantité de carburant liquide d'urgence se situe dans la plage de 400 fois la quantité d'allumage de carburant liquide à 3 fois la quantité d'allumage de carburant liquide telle que 350, 300, 250 ou 200 fois la quantité d'allumage de carburant liquide.

6. Moteur à gaz à allumage de carburant liquide (1) selon l'une quelconque des revendications 1 à 5, comprenant en outre une unité de commande (46) pour régler la quantité de carburant injectée par le seul injecteur de carburant liquide (28) en fonction du type de mode de fonctionnement, de la charge et/ ou du type de carburant liquide.

7. Moteur à gaz à allumage de carburant liquide (1) selon l'une quelconque des revendications 1 à 6, comprenant en outre un système de refroidissement rapporté au moteur (LT, HT) opérant sur un réfrigérant primaire et ayant au moins un échangeur de chaleur (51, 53) pour refroidir le réfrigérant sur la base d'un réfrigérant secondaire (55), tel que de l'eau de mer, dans lequel le système de refroidissement rapporté au moteur (LT, HT) est configuré pour avoir comme énergie de refroidissement maximale l'énergie de refroidissement requise pour faire fonctionner le moteur à gaz à allumage de carburant liquide (1) en mode d'urgence de carburant liquide.

8. Moteur à gaz à allumage de carburant liquide (1) selon l'une quelconque des revendications 1 à 7, comprenant en outre un système de refroidissement croisé (61) avec un échangeur de chaleur de pré-refroidissement (73) pour pré-refroidir le réfrigérant secondaire (55) en utilisant la chaleur latente requise pour la transition du carburant gazeux liquéfié en phase gazeuse.

9. Moteur à gaz à allumage de carburant liquide (1) selon l'une quelconque des revendications 1 à 8, dans lequel, dans le trajet d'écoulement du réfrigérant secondaire (55), le au moins un échangeur de chaleur (51, 53) du système de refroidissement rapporté au moteur est fourni en aval de l'échangeur de chaleur de pré-refroidissement (73) du système de refroidissement croisé (61).

10. Moteur à gaz à allumage de carburant liquide (1) selon la revendication 9, dans lequel le système de refroidissement croisé (61) est configuré pour pré-refroidir le réfrigérant secondaire (55) avant d'interagir avec le au moins un échangeur de chaleur (51, 53).

11. Procédé de fonctionnement d'un moteur à gaz à allumage de carburant liquide (1) selon l'une quelconque des revendications 1 à 10, le procédé comprenant :
le fonctionnement du moteur à gaz à allumage de carburant liquide (1) en mode de carburant gazeux en injectant avec le seul injecteur de carburant liquide (28) des quantités de carburant liquide dans la plage de 0,1 % à 2 % de la teneur en énergie de carburant maximale et
le fonctionnement du moteur à gaz à allumage de carburant liquide (1) dans le mode d'urgence du carburant liquide en injectant des quantités de carburant liquide dans la plage de 40 % à 10 % de la teneur en énergie maximale du carburant.

12. Procédé selon la revendication 11, comprenant en outre :
le refroidissement du moteur à gaz à allumage de carburant liquide (1) avec un réfrigérant primaire rapporté au moteur qui est lui-même refroidi via un réfrigérant secondaire (55) tel que de l'eau de mer,
dans lequel, en mode de carburant gazeux, le réfrigérant secondaire (55) est pré-refroidi en utilisant la chaleur latente requise pour la transition du carburant gazeux liquéfié en phase gazeuse.

13. Bateau comprenant :
au moins un moteur à gaz à allumage de carburant liquide (1) selon l'une quelconque des revendications 1 à 10 ;
un réservoir de gaz naturel liquéfié (63).

14. Bateau selon la revendication (13), comprenant en outre :
un système de refroidissement de moteur (LT, HT) transférant de la chaleur du moteur à gaz à allumage de carburant liquide (1) via un réfrigérant primaire à un réfrigérant secondaire (55) ;
un système de refroidissement croisé (61) avec un échangeur de chaleur de pré-refroidissement (73) pour pré-refroidir le réfrigérant secondaire (55) en utilisant la chaleur latente requise pour la transition du carburant gazeux liquéfié en phase gazeuse.

15. Bateau selon la revendication 14, dans lequel le système de refroidissement croisé (61) comprend en outre un évaporateur (69) pour évaporer du LNG en carburant gazeux et un dispositif de chauffage de gaz (71) pour chauffer en outre le carburant gazeux évaporé.
